**Europäisches Patentamt**

**European Patent Office**

**Office européen des brevets**

(11) Veröffentlichungsnummer: **0 330 987 B1**

(12) # EUROPÄISCHE PATENTSCHRIFT

(45) Veröffentlichungstag der Patentschrift: **28.07.93**

(51) Int. Cl.⁵: **H02M 3/335**

(21) Anmeldenummer: **89103068.6**

(22) Anmeldetag: **22.02.89**

(54) **Eintakt-Durchflussumrichter mit einem Transformator und mit einer Abmagnetisierungsvorrichtung.**

(30) Priorität: **04.03.88 DE 3807120**

(43) Veröffentlichungstag der Anmeldung:
**06.09.89 Patentblatt 89/36**

(45) Bekanntmachung des Hinweises auf die
Patenterteilung:
**28.07.93 Patentblatt 93/30**

(84) Benannte Vertragsstaaten:
**AT BE CH DE FR GB GR IT LI NL SE**

(56) Entgegenhaltungen:
**EP-A- 0 223 504**
**WO-A-83/02858**
**US-A- 4 415 959**

**MULLARD TECHNICAL COMMUNICATIONS**
**vol. 13, no. 127, Juli 1975, Surrey, GB Seite**
**258 - 279; L.M. WHITE: "Television switched-**
**mode power supply using the TDA2640"**

(73) Patentinhaber: **SIEMENS AKTIENGESELL-**
**SCHAFT**
**Wittelsbacherplatz 2**
**W-8000 München 2(DE)**

(72) Erfinder: **Brakus, Bogdan, Dipl.-Ing.**
**Peter-Dörfler-Strasse 3**
**W-8035 Stockdorf(DE)**
Erfinder: **Heinzl, Herbert**
**Leonhardtstrasse 12**
**W-8911 Schwabhausen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf einen wie im Oberbegriff des Patentanspruchs 1 angegebenen Eintakt-Durchflußumrichter mit einem Transformator und mit einer Abmagnetisierungsvorrichtung.

Ein derartiger Eintakt-Durchflußumrichter ist bereits aus der US-PS 4 415 959 bekannt. Der Transformator des bekannten Durchflußumrichters ist gezielt mit einer Streuinduktivität versehen, die zusammen mit dem Speicherkondensator einen Resonanzkreis bildet. Der elektronische Schalter wird jeweils am Ende einer Halbperiode des sinusförmigen Eingangsstromes und daher im stromlosen Zustand geöffnet. Im Falle der Steuerung des elektronischen Schalters durch eine Regelschaltung werden bei gleichbleibender Einschaltzeit die Ausschaltzeiten, während derer der Schalter gesperrt ist, variiert. Parallel zum Speicherkondensator ist eine Freilaufdiode mit nachfolgendem LC-Siebglied nachgeschaltet. Diese Freilaufdiode wird in jedem Energieübertragungszyklus stromführend, sobald der Speicherkondensator näherungsweise entladen ist. Die Abmagnetisierung des Transformators nach dem Ende der Einschaltzeit soll mit Hilfe des elektronischen Schalters oder eines geeigneten Netzwerkes erreicht werden.

Ferner ist aus der WO-A-8302858 bereits eine Abmagnetisierungsvorrichtung für einen Durchflußumrichter bekannt, die aus einer Serienschaltung aus einem Kondensator und einem elektronischen Schalter mit Steuerschaltung besteht. Diese Abmagnetisierungsvorrichtung ist mit einem vergleichsweise großen Aufwand verbunden.

Aufgabe der Erfindung ist es, einen Eintakt-Durchflußumrichter der eingangs genannten Art derart auszubilden, daß die Abmagnetisierungsvorrichtung mit einem vergleichsweise geringen Aufwand auskommt und daß dabei die Abmagnetisierungsenergie möglichst nicht vernichtet wird.

Gemäß der Erfindung wird der Eintakt-Durchflußumrichter zur Lösung dieser Aufgabe in der im kennzeichnenden Teil des Patentanspruchs 1 angegebenen Weise ausgebildet. Die im Primärkreis und/oder im Ausgangskreis liegende Induktivität kann eine zusätzlich zum Transformator vorgesehene und unmittelbar an den Transformator angeschlossene Drossel sein. Vorzugsweise ist sie durch die Streuinduktivität des Transformators gebildet. Durch den Einsatz des Abmagnetisierungsnetzwerkes treten am elektronischen Schalter beim Abschalten praktisch keine induktiven Spannungsspitzen auf. Ein weiterer Vorteil besteht darin, daß der Transformator eine weitgehend symmetrische sinusförmige Magnetisierung bekommt, so daß das Kernmaterial optimal ausgenutzt werden kann.

Vorteilhafte Weiterbildungen der Erfindung ergeben sich aus den abhängigen Patentansprüchen.

Die Maßnahmen nach Anspruch 2 sind mit besonders geringen HF-Störungen verbunden.

Die Weiterbildung der Erfindung nach Anspruch 3 hat den Vorteil, daß beim Einschalten des elektronischen Schalters dem Kondensator der Abmagnetisierungsvorrichtung die Induktivität des Hauptresonanzkreises vorgeschaltet ist und so den Ladestrom begrenzt.

Bei der Weiterbildung nach Anspruch 5 wird der prinzipiell bedingte hochfrequente weitere Schwingkreis aperiodisch gedämpft, ohne dabei die anderen Funktionen zu benachteiligen.

Durch die Maßnahmen nach Anspruch 8 ergibt sich, daß nach dem Umschwingen des Magnetisierungsstromes auf den maximalen negativen Wert während der Sperrphase, der Magnetisierungsvorgang definiert abgeschlossen wird. Der maximale negative Magnetisierungsstrom fließt über die Diode D1, und die durch den eingeprägten Drosselstrom $i_{L2}$ leitende Diode D2, praktisch ohne Wertänderung bis zur nächsten Einschaltphase. Dies ist die Voraussetzung für eine definierte symmetrische Magnetisierung des Transformators.

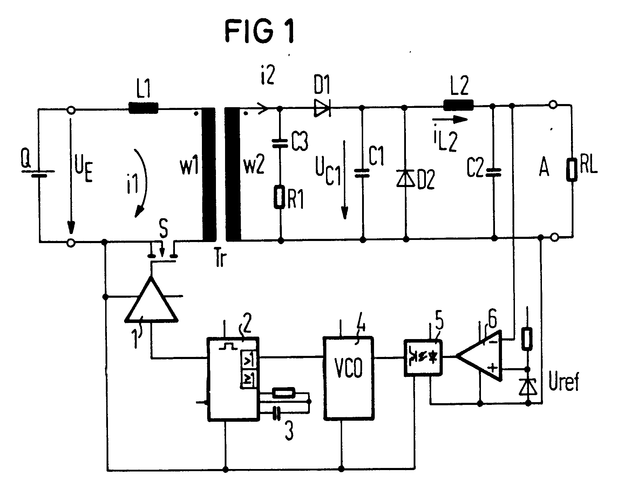

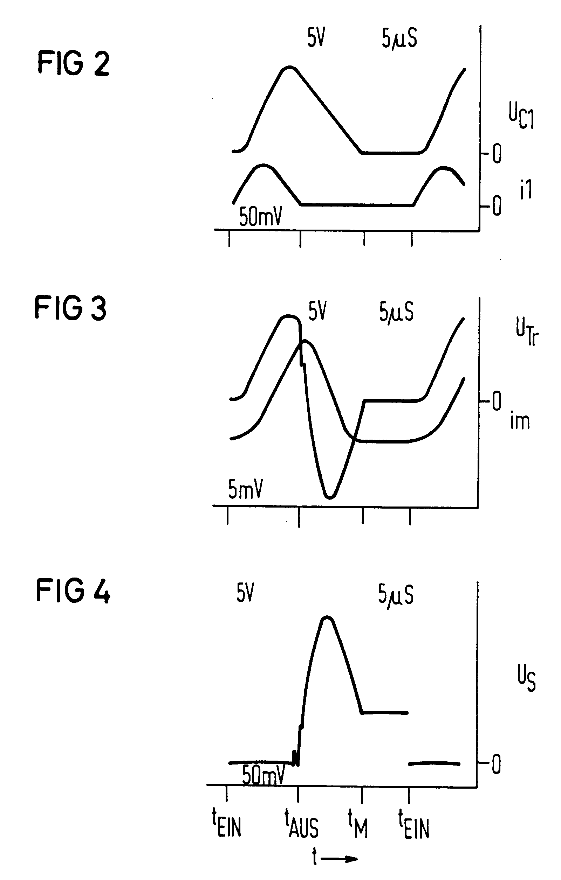

Die Erfindung wird anhand des in Figur 1 dargestellten Ausführungsbeispieles sowie anhand der in den Figuren 2 bis 4 dargestellten Impulsdiagramme näher erläutert.

Fig. 1      zeigt einen Eintakt-Durchflußumrichter mit einer fest an den Transformator angeschlossenen Abmagnetisierungsvorrichtung.

Ferner zeigen für den in Fig. 1 dargestellten Durchflußumrichter

Fig. 2      den Spannungsverlauf am Speicherkondensator und den Verlauf des Eingangsstromes

Fig. 3      für den Transformator den Verlauf der Eingangsspannung und des Magnetisierungsstromes und

Fig. 4      den zeitlichen Verlauf der Spannung am elektronischen Schalter.

Der in Figur 1 gezeigte Eintakt-Durchflußumrichter enthält den Transformator Tr. Die im Primärkreis gelegene Primärwicklung w1 des Transformators Tr ist über die Induktivität L1 und über den elektronischen Schalter S an die Gleichspannungsquelle Q angeschlossen. Die im Sekundärkreis gelegene Sekundärwicklung w2 des Transformators Tr ist über den Gleichrichter D1 an den Speicherkondensator C1 geführt. Der Speicherkondensator C1 bildet zusammen mit der im Primärkreis liegenden Induktivität L1 einen Hauptresonanzkreis. Parallel zum Speicherkondensator C1 liegt die Freilaufdiode D2. Auf die Freilaufdiode D2 folgt das aus der Drossel L2 und dem Kondensator C2 bestehende Siebglied. Parallel zum Kondensator C2 bzw.

am Ausgang des Durchflußumrichters liegt der Lastwiderstand $R_L$.

Parallel zur Sekundärwicklung w2 des Transformators Tr liegt als Abmagnetisierungsvorrichtung, die aus dem Kondensator C3 und dem Widerstand R1 bestehende Serienschaltung. Diese Serienschaltung ist unmittelbar und ständig an die Wicklung w2 des Transformators Tr angeschlossen. Die Kapazität des Kondensators C3 ist derart bemessen, daß der weitere Resonanzkreis, den die Kapazität des Kondensators C3 zusammen mit der Querinduktivität des Transformators Tr bildet, wenigstens näherungsweise dieselbe Resonanzfrequenz hat wie der Hauptresonanzkreis.

Für den Fall, daß die zum Hauptresonanzkreis gehörende Induktivität ganz oder zum Teil im Sekundärkreis liegt, ist die RC-Serienschaltung über diese Induktivität an die Sekundärwicklung w2 anzuschließen.

Der elektronische Schalter S ist durch einen Feldeffekttransistor gebildet, dessen Steuerelektrode über den Treiber 1 angesteuert wird. Der Treiber 1 liegt am Ausgang des Monoflops 2. Die Dauer, die die Ausgangsimpulse des Monoflops 2 haben, ist durch das RC-Glied 3 bestimmt und so groß bemessen wie die halbe Periodendauer des Hauptresonanzkreises.

Der Regelverstärker 6 liegt mit seinem Minuseingang am Ausgang des Durchflußumrichters und mit seinem Pluseingang an der Referenzspannung $U_{ref}$. Der Ausgang des Regelverstärkers 6 ist über den Optokoppler 5 an den Spannungs-Frequenz-Umsetzer 4 geführt, der Steuerimpulse an das Monoflop 2 abgibt, deren Folgefrequenz von der Ausgangsspannung des Optokopplers abhängt.

Die Ausgangsspannung wird dem Regelverstärker 6 zugeführt, der sie mit der Referenzspannung $U_{ref}$ vergleicht. Sein Ausgang steuert - über den Optokoppler 5 zur galvanischen Trennung - den Spannungs-Frequenz-Umsetzer 4 an. Dabei ist die Wirkungsweise so gewählt, daß einer Abweichung der Ausgangsspannung nach oben eine niedrigere Frequenz entspricht und umgekehrt.

Der Spannungs-Frequenz-Umsetzer 4 stößt mit jedem Ausgangtakt das Monoflop 2 an. Die Dauer der Ausgangsimpulse des Monoflops 2 ist auf die Dauer der Stromhalbwelle im Schalttransistor bzw. Schalter S abgestimmt. Prinzipbedingt wird diese größtenteils durch den Schwingkreis aus L1 und C1 bestimmt. Hingegen ist der Einfluß der Belastung bzw. der Eingangsspannung auf die Dauer der Stromhalbwelle am elektronischen Schalter S gering. Dadurch kann die Einschaltzeit des Schalttransistors S im ganzen Betriebsbereich konstant gehalten werden. Zum Ansteuern des Schalttransistors S ist dem Monoflop 2 der nichtinvertierende Leistungsverstärker als Treiber 1 nachgeschaltet.

Im folgenden wird die Funktion des Durchflußumrichters nach Fig. 1 beschrieben. Bei dieser Beschreibung ist einfachheitshalber ein Transformator Tr mit der Übersetzung ü = 1 gewählt. Es gibt jedoch keine Einschränkungen für andere Übersetzungsverhältnisse.

In erster Näherung darf der Widerstand R1 vernachlässigt, d. h. kurzgeschlossen werden. Die Querinduktivität $L_q$ bzw. Hauptinduktivität ist vielfach größer als die Streuinduktivität bzw. die Induktivität L1. Die Kapazität des Kondensators C3 wird so gewählt, daß sie zusammen mit der Querinduktivität $L_q$ einen Schwingkreis bildet, dessen Resonanzfrequenz

$$f_2 = \frac{1}{2\pi} \cdot \frac{1}{\sqrt{L_q \, C3}} \qquad (1)$$

ähnlich oder gleich so groß ist wie die des ersten Resonanzkreises, bestehend aus der Induktivität L1, und der Kapazität des Kondensators C1 mit

$$f_1 = \frac{1}{2\pi} \cdot \frac{1}{\sqrt{L1 \, C1}} \qquad (2)$$

Nachdem der Strom im Gleichrichter D1 zu Null geworden ist, verbleibt in der Querinduktivität $L_q$ der Magnetisierungsstrom $i_m$. Dieser kann zunächst über die Quelle $U_E$ und den noch geschlossenen Schalter S weiterfließen.

Nach dem Öffnen des Schalters S fließt der Magnetisierungsstrom - übersetzt auf die Sekundärseite - über den Kondensator C3 weiter. Die sich dabei aufbauende negative sinusförmige Spannung bildet die gleiche Spannungszeitfläche wie die positive Spannungszeitfläche, mit welcher der Transformator Tr während der Einschaltdauer beaufschlagt wird. Dadurch ist ein definierter Betrieb des Transformators Tr mit

EP 0 330 987 B1

weitgehend symmetrischer Magnetisierung gewährleistet. Ist der Magnetisierungsstrom $i_m$ auf seinen Maximalwert in negativer Richtung umgeschwungen, so fließt er weiter durch D1 und D2. Letztere ist durch den vielfach größeren eingeprägten Ausgangsstrom in dieser Phase leitend. Der neue Zyklus beginnt mit dem Wiedereinschalten des Schalters S.

Beim Wiedereinschalten verhindert die Induktivität L1 neben dem Widerstand R1 die schlagartige Ladung des Kondensators C3 über den Schalter S. Der nächste Schaltzyklus kann gleich nach Beendigung des Abmagnetisierungsvorgangs gestartet werden. Bei $f_1 = f_2$ gilt:

$$f_{TAKT\ max} = f_1 = f_2 \qquad (3)$$

d. h., die maximal Taktfrequenz entspricht den erwähnten Resonanzfrequenzen.

Da die Schaltvorgänge ausnahmslos "weich" verlaufen, gibt es ein Minimum an HF-Störungen, wie es aus den Figuren 2 bis 5 ersichtlich ist.

Die Impulsdiagramme Fig. 2 bis 4 zeigen für den in Figur 1 dargestellten Durchflußumrichter eine volle Periode mit allen wichtigen Strom- und Spannungsverläufen.

Fig. 2 zeigt den Stromverlauf $i_1$ im Primärkreis und die Kondensatorspannung $U_{C1}$ im Sekundärkreis. Vom Zeitpunkt $t_{EIN}$ bis zum Zeitpunkt $t_{AUS}$, d. h. während der Einschaltphase ist der Schalter S geschlossen. Vom Zeitpunkt $t_{AUS}$ bis zum Zeitpunkt $t_{EIN}$, d. h. während der Sperrphase ist der Schalter S geöffnet. An den aus Einschaltphase und Sperrphase bestehenden Schaltzyklus schließt sich der nächste an.

Wie Fig. 1 zeigt, hat der während der Einschaltphase im Primärkreis schließende Strom $i_1$ die Form einer Sinus-Halbwelle. Die sich daran anschließende Sperrphase während der im Primärkreis kein Strom fließt, dauert - im gezeigten Beispiel etwa um 1/3 - länger als die Einschaltphase.

Die am Kondensator C1 auftretende Spannung $U_{C1}$ steigt während der Einschaltphase an. Zu Beginn - im gezeigten Beispiel während der ersten Hälfte - der Sperrphase sinkt die Spannung $U_{C1}$ bis zum Wert der Durchlaßspannung $U_D$ der Freilaufdiode D2 ab. Diese Spannung bleibt bis zum Ende der Sperrphase bestehen.

Fig. 3 verdeutlicht den Magnetisierungsvorgang. In der Phase $t_{EIN}$ - $t_{AUS}$ ist bei dem angenommenen Übersetzungsverhältnis ü = 1 die Spannung $U_{Tr}$, die an der Primärwicklung w1 des Transformators Tr auftritt, bis auf die Restspannung der Diode D1 identisch mit der Kondensatorspannung $U_{C1}$ nach Fig. 2. In dieser Phase baut sich in der Querinduktivität $L_q$ des Transformators Tr entsprechend der eingeprägten Spannung der Magnetisierungsstrom $i_m$, d.h. die Differenz von Eingangs- und Ausgangsstrom, auf:

$$i_m = \frac{1}{L_q} \cdot \int U_{Tr}(t)\ dt$$

Der Magnetisierungsstom $i_m$ schwingt während der Phase $t_{AUS}$ - $t_M$ vom positiven Maximalwert zum negativen Maximum, im wesentlichen der Cosinus-Funktion folgend. Die Spannung $U_{Tr}$ am Transformator Tr verläuft dementsprechend sinusförmig in negativer Richtung. Bei Stromnulldurchgang erreicht die Spannung $U_{Tr}$ ihr Maximum (negativ). Da die Transformatorspannung $U_{Tr}$ vom Zeitpunkt $t_{AUS}$ an kleiner ist als die Spannung $U_{C1}$, sind der Magnetisierungskreis und der Ausgangskreis durch die Diode D1 entkoppelt. Erst beim Zeitpunkt $t_M$ versucht der Schwingkreis $L_q$, C3 die Transformatorspannung $U_{Tr}$ wieder in positiver Richtung anzuheben. Dem steht jedoch die leitende Freilaufdiode D2 im Wege, die, wie schon beschrieben, den Magnetisierungsstrom $i_m$ praktisch kurzschließt. In der Phase $t_M$ - $t_{EIN}$ ist der konstant bleibende negative Magnetisierungsstrom $i_m$ zu sehen.

Fig. 4 zeigt schließlich den Spannungsverlauf am Schalter S, der aus der Eingangsspannung $U_E$, der Transformatorspannung $U_{Tr}$ sowie der Drosselspannung $U_{L1}$ zusammengesetzt ist. Wie aus Fig. 4 hervorgeht, ist die Spannung am Schalter S während der Einschaltphase praktisch Null. Zu Beginn der Sperrphase wächst die Spannung auf einen Maximalwert an und fällt auf den Wert der Versorgungsspannung $U_E$ ab. Bis zum Ende der Sperrphase bleibt die Spannung am Schalter S konstant.

Die Kapazität des Kondensators C3 bildet mit der Induktivität L1 allerdings einen weiteren ungewollten Schwingkreis. Dieser hat eine vielfach höhere Resonanzfrequenz

4

$$f_3 = \frac{1}{2\pi} \cdot \frac{1}{\sqrt{L1\ C3}} \qquad (4)$$

als $f_1$ und $f_2$, da $L1 \ll L_q$ gilt. Um diesen Resonanzkreis zu dämpfen und hochfrequente überlagerte Schwingungen der Frequenz $f_3$ zu vermeiden, wird in Reihe zu C3 der Widerstand R1 angeschlossen. Für den aperiodischen Grenzfall gilt:

$$R1 = 2 \cdot \sqrt{\frac{L1}{C3}} \qquad (5)$$

Andererseits behindert der Widerstand R1 den Abmagnetisier-Resonanzkreis kaum, weil folgende Verhältnisse gelten:

$$L_q \gg L1$$

$$\frac{L_q}{C3} \gg \frac{L1}{C3}$$

$$R1 \ll \sqrt{\frac{L_q}{C3}} \qquad (6)$$

## Patentansprüche

1. Eintakt-Durchflußumrichter mit einem Transformator (Tr), wobei in einem Primärkreis eine Primärwicklung (w1) des Transformators (Tr) über einen mittels Steuerimpulsen abwechselnd ein- und ausschaltbaren elektronischen Schalter (S) an eine Gleichspannungsquelle (Q) angeschlossen und in einem Sekundärkreis eine Sekundärwicklung (w2) des Transformators (Tr) über einen Gleichrichter (D1) an einen Speicherkondensator (C1) geführt ist, der zusammen mit einer im Primärkreis und/oder zusammen mit einer im Sekundärkreis liegenden Induktivität (L1) einen Hauptresonanzkreis (L1, C1) bildet, mit einer parallel zum Speicherkondensator (C1) liegenden Freilaufdiode (D2), mit einer auf die Freilaufdiode (D2) folgenden Drossel (L2) und mit einer Abmagnetisierungsvorrichtung zum Abmagnetisieren des Kernes des Transformators (Tr) im Anschluß an die Einschaltphasen des elektronischen Schalters (S),
**dadurch gekennzeichnet,**
daß die Abmagnetisierungsvorrichtung (C3; R1) wenigstens einen ständig an eine Wicklung (w2) des Transformators (Tr) angeschlossenen weiteren Kondensators (C3) enthält und daß die Kapazität des weiteren Kondensators (C3) bzw. der weiteren Kondensatoren derart bemessen ist, daß der weitere Resonanzkreis ($L_q$, C3), den die Kapazität des weiteren Kondensators (C3) bzw. der weiteren Kondensatoren zusammen mit der Querinduktivität ($L_q$) des Transformators (Tr) bildet, wenigstens näherungsweise dieselbe Resonanzfrequenz hat, wie der Hauptresonanzkreis (L1, C1).

2. Durchflußumrichter nach Anspruch 1,
**dadurch gekennzeichnet,**
daß der weitere Kondensator (C3) bzw. die weiteren Kondensatoren jeweils mit einem Serienwiderstand (R1) versehen sind, so daß die Abmagnetisierungsvorrichtung aus wenigstens einer RC-Serienschaltung (R1, C3) besteht.

EP 0 330 987 B1

**3.** Durchflußumrichter nach Anspruch 2,
**dadurch gekennzeichnet,**
daß die Induktivität des Hauptresonanzkreises durch wenigstens eine Streuinduktivität gebildet ist und daß die Abmagnetisierungsvorrichtung aus nur einer RC-Serienschaltung (R1, C3) besteht, die an die im Sekundärkreis liegende Wicklung (w2) des Transformators (Tr) angeschlossen ist.

**4.** Durchflußumrichter nach Anspruch 3,
**dadurch gekennzeichnet,**
daß der Widerstand (R1) der RC-Serienschaltung (R1, C3) als Dämpfungswiderstand für den aus der Induktivität (L1) des Hauptresonanzkreises (L1, C1) und der Kapazität der RC-Serienschaltung (R1, C3) gebildeten weiteren Resonanzkreises bemessen ist.

**5.** Durchflußumrichter nach Anspruch 5,
**dadurch gekennzeichnet,**
daß der Widerstand (R1) der RC-Serienschaltung (R1, C3) derart bemessen ist, daß der aus der Induktivität (L1) des Hauptresonanzkreises (L1, C1) und der Kapazität der RC-Serienschaltung (R1, C3) gebildete Schwingkreis aperiodisch gedämpft ist.

**6.** Durchflußumrichter nach einem der Ansprüche 1 bis 5,
**dadurch gekennzeichnet,**
daß der Steuereingang des elektronischen Schalters (S), insbesondere über einen Treiber (1), an den Ausgang eines mit einem Takt variabler Taktfrequenz gesteuerten Monoflops (2) angeschlossen ist und daß die Dauer der Ausgangsimpulse des Monoflops (2) wenigstens so groß bemessen ist wie die halbe Periodendauer des Hauptresonanzkreises (L1, C1).

**7.** Durchflußumrichter nach Anspruch 6,
**dadurch gekennzeichnet,**
daß das Monoflop (2) durch einen Spannungs-Frequenz-Umsetzer (4) steuerbar ist, dessen Frequenz durch einen eingangsseitig an eine Referenzspannung ($U_{ref}$) und an einen Istwertausgang des Durchflußumrichters angeschlossenen Regelverstärker (6) steuerbar ist.

**8.** Durchflußumrichter nach einem der Ansprüche 1 bis 7,
**dadurch gekennzeichnet,**
daß zwischen dem Speicherkondensator (C1) und dem Ausgang (A) der Schaltungsanordung eine LC-Siebschaltung (L2, C2) mit vorgeschalteter Freilaufdiode (D2) angeordnet ist.

**Claims**

**1.** Single-ended forward converter comprising a transformer (Tr), in which in a primary circuit a primary winding (w1) of the transformer (Tr) is connected via an electronic switch (S), which can be alternately switched on and off by means of control pulses, to a direct-voltage source (Q), and in a secondary circuit a secondary winding (w2) of the transformer (Tr) is connected via a rectifier (D1) to a storage capacitor (C1) which, together with an inductor (L1) located in the primary circuit and/or together with an inductor (L1) located in the secondary circuit, forms a main resonant circuit (L1, C1) with a freewheeling diode (D2), which is connected in parallel with the storage capacitor (C1), with an inductor (L2) following the freewheeling diode (D2) and with a demagnetising device for demagnetising the core of the transformer (Tr) following the switching-on phases of the electronic switch (S), characterised in that the demagnetising device (C3; R1) contains at least one further capacitor (C3) which is continuously connected to a winding (w2) of the transformer (Tr), and in that the capacitance of the further capacitor (C3) or of the further capacitors is dimensioned in such a manner that the further resonant circuit ($L_q$, C3), formed by the capacitance of the further capacitor (C3) or of the further capacitors together with the shunt inductance ($L_q$) of the transformer (Tr), has at least approximately the same frequency of resonance as the main resonant circuit (L1, C1).

**2.** Forward converter according to Claim 1, characterised in that the further capacitor (C3) or the further capacitors are in each case provided with a series resistor (R1) so that the demagnetising device consists of at least one RC series circuit (R1, C3).

3. Forward converter according to Claim 2, characterised in that the inductance of the main resonant circuit is formed by at least one leakage inductor and in that the demagnetising device consists of only one RC series circuit (R1, C3) which is connected to the winding (w2) located in the secondary circuit of the transformer (Tr).

4. Forward converter according to Claim 3, characterised in that the resistor (R1) of the RC series circuit (R1, C3) is dimensioned as damping resistor for the further resonant circuit formed from the inductor (L1) of the main resonant circuit (L1, C1) and the capacitance of the RC series circuit (R1, C3).

5. Forward converter according to Claim 5, characterised in that the resistor (R1) of the RC series circuit (R1, C3) is dimensioned in such a manner that the resonant circuit formed from the inductor (L1) of the main resonant circuit (L1, C1) and the capacitance of the RC series circuit (R1, C3) is aperiodically damped.

6. Forward converter according to one of Claims 1 to 5, characterised in that the control input of the electronic switch (S) is connected, in particular via a driver (1), to the output of a monostable flip flop (2) controlled by means of a clock of variable clock frequency, and in that the duration of the output pulses of the monostable flip flop (2) is dimensioned to be at least as great as half the duration of the period of the main resonant circuit (L1, C1).

7. Forward converter according to Claim 6, characterised in that the monostable flip flop (2) can be controlled by a voltage/frequency converter (4), the frequency of which can be controlled by a control amplifier (6) connected at the input end to a reference voltage ($U_{ref}$) and to an actual-value output of the forward converter.

8. Forward converter according to one of Claims 1 to 7, characterised in that an LC filter circuit (L2, C2) with preceding freewheeling diode (D2) is arranged between the storage capacitor (C1) and the output (A) of the circuit arrangement.

## Revendications

1. Convertisseur direct à découpage comportant un transformateur (Tr), du type dans lequel, dans un circuit primaire, un enroulement primaire (w1) du transformateur (Tr) est relié, par l'intermédiaire d'un interrupteur électronique (S) susceptible d'être alternativement branché et débranché au moyen d'impulsions de commande, à une source de courant continu (Q) et, dans un circuit secondaire, un enroulement secondaire (w2) du transformateur (Tr) est relié, par l'intermédiaire d'un redresseur (D1), à un condensateur à accumulation d'énergie (C1), qui, avec une inductance (L1) située dans le circuit primaire et/ou dans le circuit secondaire, constitue un circuit résonnant principal (L1,C1), ledit convertisseur direct à découpage comportant également une diode de roue libre (D2) montée en parallèle avec le condensateur à accumulation d'énergie (C1), une bobine (L2) placée à la suite de la diode de roue libre (D2) et un dispositif de démagnétisation destiné à démagnétiser le noyau du transformateur (Tr), à la suite des phases de branchement de l'interrupteur (S) électronique, caractérisé par le fait que le dispositif de démagnétisation (C3; R1) comporte au moins un condensateur supplémentaire (C3) relié en permanence à un enroulement (W2) du transformateur (Tr) et que la capacité du condensateur supplémentaire (C3) ou des condensateurs supplémentaires est dimensionnée de sorte que le deuxième circuit résonnant ($L_q$, C3), que forme la capacité du condensateur supplémentaire (C3) ou des condensateurs supplémentaires avec l'inductance transversale ($L_q$) du transformateur (Tr), possède au moins approximativement la même fréquence de résonance que le circuit résonnant principal (L1, C1).

2. Convertisseur direct à découpage suivant la revendication 1,
caractérisé par le fait que
le condensateur supplémentaire (C3) ou les condensateurs supplémentaires est ou sont munis respectivement d'une résistance série (R1), de sorte que le dispositif de démagnétisation est composé d'au moins un circuit série-RC (R1, C3).

3. Convertisseur direct à découpage suivant la revendication 2,
caractérisé par le fait que
l'inductance du circuit résonnant principal est formée d'au moins une inductance de fuite et que le

EP 0 330 987 B1

dispositif de démagnétisation n'est constitué que d'un circuit série-RC (R1, C3) qui est relié à l'enroulement (w2) du transformateur (Tr), situé dans le circuit secondaire.

**4.** Convertisseur direct à découpage suivant la revendication 3,
caractérisé par le fait que
la résistance (R1) du circuit série-RC (R1, C3) est dimensionnée pour constituer une résistance d'amortissement pour le deuxième circuit résonnant formé de l'inductance (L1) du circuit résonnant principal (L1, C1) et de la capacité du circuit série-RC (R1, C3).

**5.** Convertisseur direct à découpage suivant la revendication 5,
caractérisé par le fait que
la résistance (R1) du circuit série-RC (R1, C3) est dimensionnée de sorte que le circuit oscillant, formé de l'inductance (L1) du circuit résonnant principal (L1, C1) et de la capacité du circuit série-RC (R1, C3), est amorti de manière apériodique.

**6.** Convertisseur direct à découpage suivant l'une des revendications 1 à 5,
caractérisé par le fait que
l'entrée de commande de l'interrupteur électronique (S) est reliée, au moins par l'intermédiaire d'un circuit d'attaque (1), à la sortie d'un multivibrateur monostable (2) commandé par une horloge à fréquence variable, et que la durée des impulsions de sortie du multivibrateur monostable (2) est dimensionnée au moins aussi longue que la moitié de la durée de période du circuit résonnant principal (L1, C1).

**7.** Convertisseur direct à découpage suivant la revendication 6,
caractérisé par le fait que
le multivibrateur monostable (2) est susceptible d'être commandé par un convertisseur tension-fréquence (4), dont la fréquence est susceptible d'être commandée par un amplificateur de réglage (6) relié côté entrée à une tension de référence ($U_{ref}$) et à une sortie de valeur instantanée du convertisseur direct.

**8.** Convertisseur direct à découpage suivant l'une des revendications 1 à 7,
caractérisé par le fait que,
entre le condensateur à accumulation d'énergie (C1) et la sortie (A) du circuit, est branché un circuit de filtrage-LC (L2, C2) à diode de roue libre (D2) reliée en amont.

FIG 1

**FIG 2**

5V     5µS

$U_{C1}$

0

i1

0

50mV

**FIG 3**

5V     5µS

$U_{Tr}$

0

im

5mV

**FIG 4**

5V       5µS

$U_S$

0

50mV

$t_{EIN}$    $t_{AUS}$   $t_M$    $t_{EIN}$

t →